# EUROPEAN PATENT APPLICATION

(11) **EP 4 443 118 A1**
(43) Date of publication of application: **09.10.2024**
(21) Application number: 23166575.3
(22) Date of filing: 04.04.2023
(51) Int. Cl.: G01J 3/02, G01J 3/10, G01J 3/18, G01J 3/20

(54) **A LIGHT SOURCE FOR GENERATING ILLUMINATION LIGHT**

(71) Applicant: F. Hoffmann-La Roche AG, 4070 Basel (CH); Roche Diagnostics GmbH, 68305 Mannheim (DE)
(72) Inventor: Salzmann, Wenzel, 68165 Mannheim (DE)
(74) Representative: Altmann Stößel Dick Patentanwälte PartG mbB

(57) **Abstract**

A light source (112) for generating illumination light for illuminating at least one sample is disclosed. The light source (112) comprises
- at least one array of light emitters (114), wherein each of the light emitters (114) is configured for emitting at least one light beam along a light beam path, wherein the light beam has a predefined wavelength range, and
- at least one reflective optical grating (116) configured for overlaying the light beam paths,
- at least one transfer element (118);
wherein the transfer element (118) is arranged between the array of light emitters (114) and the optical grating (116) such that the transfer element (118) directs the emitted light beams onto the optical grating (116) and provides the light beams reflected from the optical grating (116) and impinging on the transfer element (118) into at least one measurement channel (120), wherein the measurement channel (120) is configured for receiving at least one sample.

## Description

### Technical Field

The present application refers to a light source for generating illumination light for illuminating at least one sample, a photometer for obtaining photometric information, and a method for chemistry analysis of multiple assays using photometry. The invention further relates to computer program with program means for executing the method according to the invention. Devices, methods, and computer programs according to the present invention may be used in clinical chemistry analysis. Other fields of application of the present invention, however, are feasible.

### Background art

Clinical chemistry analysis of multiple assays using photometry requires a wide optical source spectrum, ranging from near ultraviolet (UV) to near infrared (IR). A standard configuration for a spectral photometer unit for multispectral detection within near UV to near IR range may comprise a photometer optical module (e.g. a comparatively low cost photometer optical module) comprising a light source, beam optics and at least one sample cuvette holder, and a polychromator module (e.g. a comparatively high cost polychromator) for detection. In case several independent measurement channels shall be realized, both modules have to be reproduced. In case it is desired to cover this range with LED sources, usually multiple emitters are required. For photometry, this leaves the task to collinearly superimpose rays of multiple emitters. Several methods are available, e.g. mixing glass rods, optical fibres or dicroic mirror cascades. All these have limitations, e.g. when it comes to the superposition of larger numbers ( >5-6) of emitters. Also, clinical chemistry photometric measurement requires high light source stability and rigid design which is often not possible, e.g. for fiber bundles.

US 6,825,930 B2 describes a multi-spectral microscopy system for illuminating a sample with light of a selectable spectral content and generating an image of the sample in response to the illumination. The multi-spectral microscopy system includes a multispectral illuminator that provides output radiation having the selectable spectral content.

US 10,985,534 B2 describes monitoring of one or more secondary diffracted beams formed within a laser resonator provides information based at least in part on which a primary diffracted beam formed within the laser resonator is controlled.

In www.nature.com/articles/srep32012, Scientific Reports volume 6, Article number: 32012 (2016) "A fast multispectral light synthesizer based on LEDs and a diffraction grating" a wavelength combiner is described based on a reflective planar diffraction grating and light emitting diodes with emission peaks from 350 to 630 nm that were positioned at the angles corresponding to the first diffraction order of the reversed beam. The combined output beam was launched into a fibre. The device contains no moving parts, has low stray light and is intrinsically capable of multi-band output. Possible applications include visual physiology, biomedical optics, microscopy and spectroscopy.

### Problem to be solved

It is therefore desirable to provide methods and devices which address the abovementioned technical challenges. Specifically, methods, computer programs and devices shall be proposed which allow for a simplified version of multi-channel multispectral photometer.

### Summary

This problem is addressed by a light source for generating illumination light for illuminating at least one sample, a photometer for obtaining photometric information, a method for chemistry analysis of multiple assays using photometry, a computer program, a computer-readable storage medium and a non-transient computer-readable medium with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect, a light source for generating illumination light for illuminating at least one sample is disclosed.

The light source comprises
- at least one array of light emitters, wherein each of the light emitters is configured for emitting at least one light beam along a light beam path, wherein the light beam has a predefined wavelength range, and
- at least one reflective optical grating configured for overlaying the light beam paths,
- at least one transfer element.

The transfer element is arranged between the array of light emitters and the optical grating such that the transfer element directs the emitted light beams onto the optical grating and provides the light beams reflected from the optical grating and impinging on the transfer element into at least one measurement channel. The measurement channel is configured for receiving at least one sample.

Such a light source, in particular such a multispectral light source, may allow providing a simplified version of multi-channel multispectral photometer. The 'high-cost part' of spectral multiplexing can be complained into one multi-spectral light source. Multiple photometer modules can be supplied from this light source, thus allowing parallel, independent measurement of multiple samples without reproducing the high cost components.

As used herein, the term "light" as used herein is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range. Herein, the term "ultraviolet spectral range", generally, may refer to electromagnetic radiation having a wavelength of 1 nm to 400 nm, wherein the range of 300 to 400 nm is usually denominated as "near ultraviolet spectral range" (NUV). The term "infrared spectral range" (IR) generally refers to electromagnetic radiation of 760 nm to 1000 µm, wherein the range of 760 nm to 1.5 µm is usually denominated as "near infrared spectral range" (NIR) while the range from 1.5 µ to 15 µm is denoted as "mid infrared spectral range" (MidIR) and the range from 15 µm to 1000 µm as "far infrared spectral range" (FIR). For example, light used for the typical purposes of the present invention is light in a wavelength range from the near ultraviolet to the near infrared spectral range, e.g. from 340 to 800 nm. Material properties or properties on the chemical constitution of many objects can be derived in this spectral range. It shall be noted, however, that other spectral ranges are also feasible.

The term "light source" as used herein is a broad term and is to be given its ordinary and customary meaning to a person of ordinary skill in the art and is not to be limited to a special or customized meaning. The term specifically may refer, without limitation, to an arbitrary device configured for generating or providing light in the sense of the above-mentioned definition. As will be outlined in further detail below, the light source generally can be embodied in various ways. The light source can be for example part of a multi-channel multispectral photometer, e.g. and may be arranged in a housing of the photometer.

The term "illumination light" as used herein is a broad term and is to be given its ordinary and customary meaning to a person of ordinary skill in the art and is not to be limited to a special or customized meaning. The term specifically may refer, without limitation, to light propagating from the array of light emitters to the sample. The term "illuminate", as used herein, is a broad term and is to be given its ordinary and customary meaning to a person of ordinary skill in the art and is not to be limited to a special or customized meaning. The term specifically may refer, without limitation, to the process of exposing at least one element to light.

The term "sample" as used herein is a broad term and is to be given its ordinary and customary meaning to a person of ordinary skill in the art and is not to be limited to a special or customized meaning. The term specifically may refer, without limitation, to an aliquot of a substance such as a chemical or biological compound. Specifically, the sample may be or may comprise at least one biological specimen, such as one or more of: blood; blood serum; blood plasma; urine; saliva. The sample can be mixed, e.g. with some assay specific reagents involving chromogenic or turbidimetric indicators. Additionally or alternatively, the sample may be or may comprise a chemical substance or compound and/or a reagent. The sample may specifically be a liquid sample, such as an aliquot of a fluid substance of the chemical or biological compound. For example, the liquid sample may be or may comprise at least one pure liquid, such as a liquid substance and/or a solution containing one or more liquid substances, comprising the at least one chemical and/or the biological substance. As another example, the liquid sample may be or may comprise a liquid mixture, such as a suspension, an emulsion and/or a dispersion of one or more chemical and/or biological substances. However, other, in particular non-liquid samples are also possible. Other sample types may be, for example, tissue or homogenized material.

The sample may be provided in at least one sample container. The term "sample container" as used herein is a broad term and is to be given its ordinary and customary meaning to a person of ordinary skill in the art and is not to be limited to a special or customized meaning. The term specifically may refer, without limitation, to a receptacle configured for one or more of containing, storing and/or transporting a sample, specifically a liquid sample. Further, the sample container may be configured for being handled in the sample handling system. Specifically, the sample container may be used in the field of medical and/or chemical laboratories. For example, the sample container may be selected from the group consisting of: a vessel; a vial; a syringe; a cartridge; an ampoule; a tube. The sample container may be a piece of laboratory glass- or plastic-ware optionally comprising a cap on its upper end. For example, the sample container may be a glass or transparent plastic container. The sample container may be a cylindrical tube, e.g. a cylindrical tube having a circular and/or polygonal cross-section. Other types or forms of sample containers are also possible.

The term "array" as used herein is a broad term and is to be given its ordinary and customary meaning to a person of ordinary skill in the art and is not to be limited to a special or customized meaning. The term specifically may refer, without limitation, to an ordered arrangement of objects. A position and/or an orientation of the objects in the arrangement may be fixed relative to the other objects in the arrangement. Specifically, the array of emitters may comprise an ordered arrangement of the emitters, wherein a position and/or an orientation of the emitters relative to each other may be fixed. The array may comprise a plurality of emitters arranged in a matrix. The term "matrix" as used herein is a broad term and is to be given its ordinary and customary meaning to a person of ordinary skill in the art and is not to be limited to a special or customized meaning. The term specifically may refer, without limitation, to an arrangement of a plurality of elements in a predetermined geometrical order. The matrix specifically may be or may comprise a rectangular matrix having one or more rows and one or more columns. The rows and columns specifically may be arranged in a rectangular fashion. However, other arrangements are feasible, such as nonrectangular arrangements. As an example, circular arrangements are also feasible, wherein the elements are arranged in concentric circles or ellipses about a center point.

The array of light emitters may comprise a one- or a two-dimensional array of light emitters. The light emitters may be arranged within a flat plane or on a curved plane. An arrangement on a curved plane may allow for compensating chromatic aberration and field curvature of the used transfer element, e.g. of a collimating lens or lens system, thereby maximizing an output power.

The array of light emitters may be arranged, e.g. linearly arranged, on a printed circuit board assembly (PCBA). For example, the array of light emitters may be mounted using a "chip-on-board" technology and/or a "chip-on-flex" technology. For example, for arranging the light emitters on a curved plane LEDs may be used which are mounted to flex-print assemblies using a chip-on-board technology. The array of light emitters may be mounted on a flexible substrate. For example, Flexible printed circuits (FPC) may be used. FPC may be designed as described in D. Shavit "The developments of LEDs and SMD Electronics on transparent conductive Polyester film", Vacuum International, 1/2007, S. 35 ff.

The term "light emitter", also denoted as emitter, as used herein is a broad term and is to be given its ordinary and customary meaning to a person of ordinary skill in the art and is not to be limited to a special or customized meaning. The term specifically may refer, without limitation, to at least one arbitrary device configured for generating at least one light beam. For example, each of the light emitters comprises at least one light-emitting diode. The term "light-emitting diode" or briefly "LED", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of: a light-emitting diode based on spontaneous emission of light, in particular an organic light emitting diode, a light-emitting diode based on superluminescence (sLED), or a laser diode (LD). In the following, without narrowing the possible embodiments of the light-emitting diode to any of the before-mentioned physical principles or setups, the abbreviation "LED" will be used for any type of light-emitting diode. The LED may have a spectral bandwidth from 20 to 30 nm.

The light emitters of the array may be of the same type or, alternatively, of a different type. The light emitters of the array may be controllable independently from each other, such as by providing electric current to each of the light emitters independently.

Each of the light emitters is configured for emitting at least one light beam having a predefined wavelength range. An optical source spectrum of the array of light emitters may range from near ultraviolet to near infrared, e.g. from 340 to 800 nm. For example, the light-emitting diodes have a center wavelengths at least partially located in the spectral range of 340 to 800 nm.

The light emitters may be configured for emitting light beams of the same or of different wavelengths. For example, the light emitters are configured for emitting light beams of the same wavelength. In case of multiple emitters of the same wavelength, the light emitters may be arranged at an appropriate distance to each other and perpendicular to the dispersion direction of the optical grating for said wavelength.

For example, the light emitters are configured for emitting light beams of different wavelengths. The array of light emitters may be configured for emitting at least 12 wavelength bands.

The light emitters may emit the light beams at least partially at different times. The term "at least partially at different times" as used herein is a broad term and is to be given its ordinary and customary meaning to a person of ordinary skill in the art and is not to be limited to a special or customized meaning. The term specifically may refer, without limitation, to emitting light beams at least partially sequentially and/or time shifted.

The term "optical grating" as used herein is a broad term and is to be given its ordinary and customary meaning to a person of ordinary skill in the art and is not to be limited to a special or customized meaning. The term specifically may refer, without limitation, to at least one optical element configured for diffracting impinging light in different diffraction angles, wherein the diffraction angle depends on an incident angle under which the light impinges onto the optical grating and/or the wavelength of the light.

The optical grating is a reflective grating. The reflective optical grating may be configured for reflecting impinging light. The reflective optical grating may have a reflecting surface. The reflective surface may be coated with one or more of at least one metal such as aluminum, silver, gold, or a multilayer dielectric high-reflective coating.

The reflective optical grating is configured for overlaying the light beam paths. The term "light beam" as used herein is a broad term and is to be given its ordinary and customary meaning to a person of ordinary skill in the art and is not to be limited to a special or customized meaning. The term specifically may refer, without limitation, to an amount of light, specifically an amount of light traveling essentially in the same direction, including the possibility of the light beam having a spreading angle or widening angle. The term "light beam path" as used herein is a broad term and is to be given its ordinary and customary meaning to a person of ordinary skill in the art and is not to be limited to a special or customized meaning. The term specifically may refer, without limitation, to a trajectory of the light beam. The term "overlaying" as used herein is a broad term and is to be given its ordinary and customary meaning to a person of ordinary skill in the art and is not to be limited to a special or customized meaning. The term specifically may refer, without limitation, to superimposing, e.g. spatial superimposing, the trajectories of the light beams generated by the different light emitters of the array.

The optical grating may comprise at least one spherical grating. The spherical grating may be configured for overlaying the light beam paths and for focusing the light beams into the measurement channel.

The term "transfer element" as used herein is a broad term and is to be given its ordinary and customary meaning to a person of ordinary skill in the art and is not to be limited to a special or customized meaning. The term specifically may refer, without limitation, to at least one optical element configured for modifying an impinging light beam, such as one or more of a beam parameter of the light beam, a width of the light beam or a direction of the light beam. The transfer element may be configured for collimating the emitted light beams, e.g. onto the optical grating. The transfer element may comprise one or more of at least one lens, at least one lens system comprising at least two lenses, at least one dispersive transmissive element, at least one Quartz lenses. The transfer element may be configured for collimating the emission cones of the light beams emitted by the light emitters, e.g. by using one or multiple lenses of appropriate size.

The transfer element is arranged between the array of light emitters and the optical grating such that the transfer element directs, e.g. collimates, the emitted light beams onto the optical grating and provides the light beams reflected from the optical grating and impinging on the transfer element into at least one measurement channel. For example, the optical setup may be as follows. The array of LEDs may be followed by one set of lenses and the reflective optical grating. Here, the diffracted light beams may pass the same set of lenses that direct them to the measurement channel, e.g. focus them to a fiber entry of at least one optical fiber. Thus, light emitted by the light emitters passes the transfer element twice. The transfer element may direct the light beams from the array of light emitters to the optical grating and, afterwards, the transfer element may focus the light beams reflected from the optical grating into the measurement channel, in particular into at least one optical fiber. Most often, the first-order light beam is going back along the incident beam. Using such a configuration can allow for reducing a required space and component costs. This configuration can allow making the optical setup more compact.

For example, the optical fibers are located in between the emitters. As outlined above, the circular arrangements of emitters are also feasible, wherein the emitters are arranged in concentric circles or ellipses about a center point. The entry to the measurement channel, e.g. the fiber entry, may be arranged at the center point. The entry to the measurement channel may be arranged between the emitters which are arranged in concentric circles or ellipses.

The term "measurement channel" as used herein is a broad term and is to be given its ordinary and customary meaning to a person of ordinary skill in the art and is not to be limited to a special or customized meaning. The term specifically may refer, without limitation, to a unit, e.g. of a photometer, configured for performing at least one measuring task on at least one sample. The measurement channel is configured for receiving at least one sample. The measurement channel may comprise at least one sample container holder configured for holding at least one sample container comprising a sample. The term "sample container holder" as used herein is a broad term and is to be given its ordinary and customary meaning to a person of ordinary skill in the art and is not to be limited to a special or customized meaning. The term specifically may refer, without limitation, to a receptacle configured for one or more of holding and/or providing the sample container for obtaining photometric information. For example the sample container may be a sample cuvette, also denoted as measurement cuvette, and the sample container holder may be a sample cuvette holder.

The measurement channel further comprises at least one detection unit. The term "detection unit" as used herein is a broad term and is to be given its ordinary and customary meaning to a person of ordinary skill in the art and is not to be limited to a special or customized meaning. The term specifically may refer, without limitation, to unit comprising at least one photosensitive element configured for detecting light, e.g. at least one array of photosensitive elements each configured for detecting light. The detection unit comprises at least one photosensitive element, e.g. an array of photosensitive elements, for detecting detection light from the sample. The term "detection light" as used herein is a broad term and is to be given its ordinary and customary meaning to a person of ordinary skill in the art and is not to be limited to a special or customized meaning. The term specifically may refer, without limitation, to light propagating from the sample to the array of photosensitive elements. The photosensitive element is configured for generating at least one detector signal in response to illumination. The photosensitive elements may comprise at least a photosensitive area configured for generating an electrical signal depending on an intensity of incident light. The term "photosensitive area" as used herein is a broad term and is to be given its ordinary and customary meaning to a person of ordinary skill in the art and is not to be limited to a special or customized meaning. The term specifically may refer, without limitation, to an area of the photosensitive element which may be illuminated externally and in response to which illumination at least one electrical signal is generated. The photosensitive area may specifically be located on a surface of the photosensitive element. The measurement channel may comprise a single photosensitive element, e.g. a single photodetector. Alternatively, the photosensitive element may be or may be part of a pixelated optical device. For example, an array of photosensitive elements may be used comprising a one- or a two-dimensional array of photosensitive elements. As an example, the array of photosensitive elements may comprises a CCD sensor, e.g. a CCD chip, or a CMOS sensor, e.g. a CMOS chip. However, non-pixelated photosensitive elements are possible, as described above.

For example, the light source is configured for directly directing the light beams to at least one sample container.

For example, the light source comprises at least one optical fiber. The term "optical fiber" as used herein is a broad term and is to be given its ordinary and customary meaning to a person of ordinary skill in the art and is not to be limited to a special or customized meaning. The term specifically may refer, without limitation, to least one optical element configured to guide at least partially at least one light beam impinging on an entrance face, also denoted as entrance face, of the optical fiber to an exit end, also denoted as exit face, of the optical fiber. The entrance face and the exit face may be separated from each other by a certain distance and may be connected by at least one light guiding structure. The term "to guide at least partially" as used herein is a broad term and is to be given its ordinary and customary meaning to a person of ordinary skill in the art and is not to be limited to a special or customized meaning. The term specifically may refer, without limitation, to refers to perfect light guiding and to configurations in which absorptions and reflections from the entrance end and/or absorptions and reflections from or out of the light guiding structure are possible. The optical fibers may comprise at least one material selected from the group consisting of: silica, aluminosilicate glass, chalcogenide glasses, germane silicate glass, fluorozirconate, rare earth doped glass, fluoride glass, sapphire, doped variants, e.g. for silica glass, phosphate glass, PMMA, polystyrene, fluoropolymers such as poly(perfluoro-butenylvinyl ether), or the like. The optical fibers may be a single or multi-mode fiber.

Dimensions and properties of the transfer element and the optical grating are selected such that an incident cone on an entrance end of the optical fiber optimally fills a fibers facet and numerical aperture, thereby maximizing a coupled optical power. The orientation of the optical grating and line density, as well as the position of the light emitters may be adjusted in such a way that the diffracted beams that leave the optical grating are all collinearly superimposed for all light emitters. When subsequently passing the transfer element the overlaid beams may be focused and e.g. directed to the sample directly or coupled into an optical fiber.

The light source may comprise a bundle of optical fibers. The term "bundle of optical fibers" as used herein is a broad term and is to be given its ordinary and customary meaning to a person of ordinary skill in the art and is not to be limited to a special or customized meaning. The term specifically may refer, without limitation, to a plurality of optical fibers, such as a set of optical fibers. The bundle may comprise a plurality of single optical fibers or a plurality of multifurcated optical fibers. The optical fibers may have identical properties. The bundle of optical fibers may have a common entrance face. Each of the optical fibers may have its own exit face. A number of optical fibers may correspond to a number of measurement channels.

The light source comprises at least one first coupling element configured for coupling the light beams leaving the optical grating into the optical fiber. For example, the transfer element may function as a first coupling element. However, other options are feasible, e.g. embodiments in which the light source comprises at least one first coupling element in addition to the transfer element. The coupling element may comprise at least one transfer element, e.g. the transfer element as described above or at least one further transfer element comprising at least one lens or at least one lens system, configured for focusing the light beams leaving the optical grating into the optical fiber. The first coupling element may be arranged at the entrance face, e.g. at the common entrance face. The light source may comprise at least one second coupling element configured for providing the light beam form the optical fiber to the measurement channel. The second coupling element may be arranged at the exit face of the respective optical fiber.

For example, the light source may be configured for overlaying the light beam paths of an array of light emitters of different wavelengths into one collinear beam that can be directly directed into a sample container and/or may be coupled into at least one optical fiber. In addition, the light source can allow coupling of multiple light emitters of the same or different wavelength into multiple optical fibers using within the same device.

In a further aspect of the present invention a photometer for obtaining photometric information is disclosed. The photometer comprises at least one light source according to the present invention is disclosed. Thus, with respect to definitions and embodiments reference is made to the description of the light source described in a first aspect of the present invention.

The photometer further comprises
- at least one measurement channel comprising at least one sample container holder configured for holding at least one sample container comprising a sample, wherein the measurement channel further comprises at least one detection unit comprising at least one photosensitive element in a beam path of detection light from the sample, wherein the photosensitive element is configured for generating at least one detector signal in response to illumination,
- at least one processor for evaluating the detector signal, thereby deriving the photometric information on the sample from the detector signal.

The term "photometer" as used herein is a broad term and is to be given its ordinary and customary meaning to a person of ordinary skill in the art and is not to be limited to a special or customized meaning. The term specifically may refer, without limitation, to at least one device configured for obtaining photometric information. The photometer may be configured for analytical chemistry. The photometer may be a clinical chemical photometer.

The photometric information may be transmission or absorption data. The photometric information may be one or more of at least one luminance value, at least one luminous intensity value, a qualitative and/or quantitative information about at least one analyte in the sample. The term "analyte" as used herein is a broad term and is to be given its ordinary and customary meaning to a person of ordinary skill in the art and is not to be limited to a special or customized meaning. The term specifically may refer, without limitation, to a chemical and/or biological substance. As an example, the analyte may be selected from the group consisting of: glucose, lactate, triglycerides, cholesterol. For example, the photometer may be configured for determining a concentration of at least one analyte in a sample, e.g. using Lambert-Beer's law.

The photometer may be a multispectral photometer. The term "multispectral" as used herein is a broad term and is to be given its ordinary and customary meaning to a person of ordinary skill in the art and is not to be limited to a special or customized meaning. The term specifically may refer, without limitation, to the suitability of the photometer for obtaining the photometric information in different spectral ranges. As outlined above, the light source can provide illumination light with different wavelengths.

The photometer may be a multi-channel photometer. The term "multi-channel" as used herein is a broad term and is to be given its ordinary and customary meaning to a person of ordinary skill in the art and is not to be limited to a special or customized meaning. The term specifically may refer, without limitation, to a plurality of measurement channels. The light source can provide illumination light with a different wavelength to each of the measurement channels. Each of the measurement channels may comprise at least one detection unit.

The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Specifically, the processor may be or may comprise at least one Graphics Processing Unit (GPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) and/or one or more tensor processing unit (TPU) and/or one or more chip, such as a dedicated machine learning optimized chip, or the like. The processor may be at least partially cloud based.

The processor may be configured, such as by software programming, for performing one or more evaluation operations on the detector signal for deriving the photometric information. For example, the processor may be configured for deriving the photometric information on the sample from the detector signal by using at least one, e.g. predetermined, relationship between the photometric information and the detector signal.

The photometer may comprise at least one user interface for outputting the photometric information. The term "user interface" as used herein is a broad term and is to be given its ordinary and customary meaning to a person of ordinary skill in the art and is not to be limited to a special or customized meaning. The term may refer, without limitation, to an element or device which is configured for interacting with its environment, such as for the purpose of unidirectionally or bidirectionally exchanging information, such as for exchange of one or more of data or commands. For example, the user interface may be configured to share information with a user and to receive information by the user. The user interface may be a feature to interact visually with a user, such as a display, or a feature to interact acoustically with the user. The user interface, as an example, may comprise one or more of: a graphical user interface; a data interface, such as a wireless and/or a wire-bound data interface. The term "outputting" as used herein is a broad term and is to be given its ordinary and customary meaning to a person of ordinary skill in the art and is not to be limited to a special or customized meaning. The term specifically may refer, without limitation, to the process of making information available to another system, data storage, person or entity. The output, as an example, may take place in one or more of a computer-readable format, a visible format or an audible format.

In a further aspect of the present invention, a method for method for chemistry analysis of at least one sample using photometry is disclosed. The method comprises using at least one photometer according to the present invention, e.g. as described above or as will further be described below in more detail. Thus, for possible definitions and options, reference may be made to the disclosure of the photometer and the light source.

The method steps may be performed in the given order or may be performed in a different order. Further, one or more additional method steps may be present which are not listed. Further, one, more than one or even all of the method steps may be performed repeatedly.

The method comprises the following steps:
a) generating illumination light and providing it to at least one measurement channel by using the light source, thereby illuminating the sample of the measurement channel;
b) detecting in the measurement channel the detection light from the sample and generating at least one detector signal by using the detection unit; and
c) evaluating the detector signal thereby deriving the photometric information on the sample by using the processor.

The method may comprise chemistry analysis of multiple assays. The photometer, as outlined above, may be a multispectral and multichannel photometer. The method may comprise in step a) generating illumination light and providing it to a plurality of measurement channels by using the light source, and optionally by using the optical fibers, thereby illuminating the respective sample of the measurement channels. In step b), in each of the measurement channels, the detection light from the sample may be detected and at least one detector signal may be generated by using the respective detection unit. Step c) may comprise evaluating the detector signals thereby deriving the photometric information on the samples from the detector signals by using the processor.

The term "assay" as used herein is a broad term and is to be given its ordinary and customary meaning to a person of ordinary skill in the art and is not to be limited to a special or customized meaning. The term specifically may refer, without limitation, to any in vitro diagnostics (IVD)-reagent kit, specifically for clinical chemistry detection methods. The IVD reagent kit may be used for determining a specific analyte or a plurality of analytes at the same time, e.g. in multiplex assays. For example, one or more of the following analytes may be determined glucose, calcium, sodium, potassium, uric acid, cholesterol and the like.

The method may comprises outputting the photometric information by using at least one user interface.

The method may be computer-implemented. The term "computer-implemented" as used herein is a broad term and is to be given its ordinary and customary meaning to a person of ordinary skill in the art and is not to be limited to a special or customized meaning. The term specifically may refer, without limitation, to a method involving at least one computer and/or at least one computer network or a cloud. The computer and/or computer network and/or a cloud may comprise at least one processor which is configured for performing at least one of the method steps of the method according to the present invention. Preferably each of the method steps is performed by the computer and/or computer network and/or a cloud. The method may be performed completely automatically, specifically without user interaction. The term "automatically" as used herein is a broad term and is to be given its ordinary and customary meaning to a person of ordinary skill in the art and is not to be limited to a special or customized meaning. The term specifically may refer, without limitation, to a process which is performed completely by means of at least one computer and/or computer network and/or a cloud and/or machine, in particular without manual action and/or interaction with a user.

Further disclosed and proposed herein is a computer program including computer-executable instructions for performing the method according to the present invention in one or more of the embodiments enclosed herein when the instructions are executed by the photometer, e.g. on a processor of the photometer. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps a) to c) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on the photometer, e.g. a processor of the photometer. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a non-transient computer-readable medium including instructions that, when executed by one or more processors, cause the one or more processors to perform the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

Summarizing and without excluding further possible embodiments, the following embodiments may be envisaged:
Embodiment 1. A light source for generating illumination light for illuminating at least one sample, wherein the light source comprises
   - at least one array of light emitters, wherein each of the light emitters is configured for emitting at least one light beam along a light beam path, wherein the light beam has a predefined wavelength range, and
   - at least one reflective optical grating configured for overlaying the light beam paths,
   - at least one transfer element;
   wherein the transfer element is arranged between the array of light emitters and the optical grating such that the transfer element directs the emitted light beams onto the optical grating and provides the light beams reflected from the optical grating and impinging on the transfer element into at least one measurement channel, wherein the measurement channel is configured for receiving at least one sample.
Embodiment 2. The light source according to the preceding embodiment, wherein the light emitters are configured for emitting light beams of different wavelengths.
Embodiment 3. The light source according to any one of the embodiments 1 or 2, wherein the light emitters are configured for emitting light beams of the same wavelength, wherein the light emitters are arranged perpendicular to a dispersion direction for said wavelength of the optical grating.
Embodiment 4. The light source according to any one of the preceding claims, wherein the array of light emitters comprises a one- or a two-dimensional array of light emitters.
Embodiment 5. The light source according to any one of the preceding embodiments, wherein the array of light emitters is configured for emitting at least 12 wavelength bands.
Embodiment 6. The light source according to any one of the preceding embodiments, wherein an optical source spectrum of the array of light emitters ranges from near ultraviolet to near infrared.
Embodiment 7. The light source according to any one of the preceding embodiments, wherein each of the light emitters comprises at least one light-emitting diode.
Embodiment 8. The light source according to the preceding embodiment, wherein the light-emitting diodes have a center wavelengths at least partially located in the spectral range of 340 to 800 nm.
Embodiment 9. The light source according to any one of the preceding embodiments, wherein the light source is configured for directly directing the light beams to at least one sample container.
Embodiment 10. The light source according to any one of the preceding embodiments, wherein the light source comprises at least one optical fiber.
Embodiment 11. The light source according to the preceding embodiment, wherein the light source comprises a bundle of optical fibers.
Embodiment 12. The light source according to any one of the two preceding embodiments, wherein the light source comprises at least one first coupling element configured for coupling the light beams leaving the optical grating into the optical fiber.
Embodiment 13. The light source according to any one of the preceding embodiments, wherein the transfer element is configured for collimating the emitted light beams onto the optical grating.
Embodiment 14. The light source according to any one of the preceding embodiments, wherein the light emitters are arranged on a curved plane.
Embodiment 15. The light source according to any one of the preceding embodiments, wherein the array of emitters is arranged on a printed circuit board assembly (PCBA).
Embodiment 16. The light source according to any one of the preceding embodiments, wherein the optical grating comprises at least one spherical grating, wherein the spherical grating is configured for overlaying the light beam paths and for focusing the light beams into the measurement channel.
Embodiment 17. A photometer for obtaining photometric information, comprising:
   - at least one light source according to any one of the preceding embodiments,
   - at least one measurement channel comprising at least one sample container holder configured for holding at least one sample container comprising a sample, wherein the measurement channel further comprises at least one detection unit comprising at least one photosensitive element in a beam path of detection light from the sample, wherein the photosensitive element is configured for generating at least one detector signal in response to illumination,
   - at least one processor for evaluating the detector signal, thereby deriving the photometric information on the sample from the detector signal.
Embodiment 18. The photometer according to the preceding embodiment, wherein each of the photosensitive elements comprises at least a photosensitive area configured for generating an electrical signal depending on an intensity of incident light.
Embodiment 19. The photometer according to any one of the preceding embodiments referring to a photometer, wherein the sample is a sample of a bodily fluid such as blood, plasma, serum, saliva or urine.
Embodiment 20. The photometer according to any one of the preceding embodiments referring to a photometer, wherein the photometer comprises at least one user interface for outputting the photometric information.
Embodiment 21. A method for chemistry analysis of at least one sample using photometry, wherein the method comprises using at least one photometer according to any one of the preceding embodiments referring to a photometer, the method comprising the following steps:
   a) generating illumination light and providing it to at least one measurement channel by using the light source, thereby illuminating the sample of the measurement channel;
   b) detecting in the measurement channel the detection light from the sample and generating at least one detector signal by using the detection unit; and
   c) evaluating the detector signal thereby deriving the photometric information on the sample by using the processor.
Embodiment 22. The method according to the preceding embodiment, wherein the method comprises outputting the photometric information by using at least one user interface.
Embodiment 23. The method according to anyone of the preceding method embodiments, wherein the method is computer-implemented.
Embodiment 24. A computer program comprising instructions which, when the program is executed by the photometer according to any one of the preceding embodiments referring to a photometer, cause the photometer to perform the method according to any one of the preceding embodiments referring to a method.
Embodiment 25. A computer-readable storage medium comprising instructions which, when the instructions are executed by the photometer according to any one of the preceding embodiments referring to a photometer, cause the photometer to perform the method according to any one of the preceding embodiments referring to a method.
Embodiment 26. A non-transient computer-readable medium including instructions that, when executed by one or more processors, cause the one or more processors to perform the method according to any one of the preceding embodiments referring to a method.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a photometer and a light source according to the present invention;
- Figures 2A to 2C: show an embodiment of the light source; and
- Figure 3: shows an embodiment of a method for chemistry analysis of at least one sample using photometry according to the present invention.

### Detailed description of the embodiments

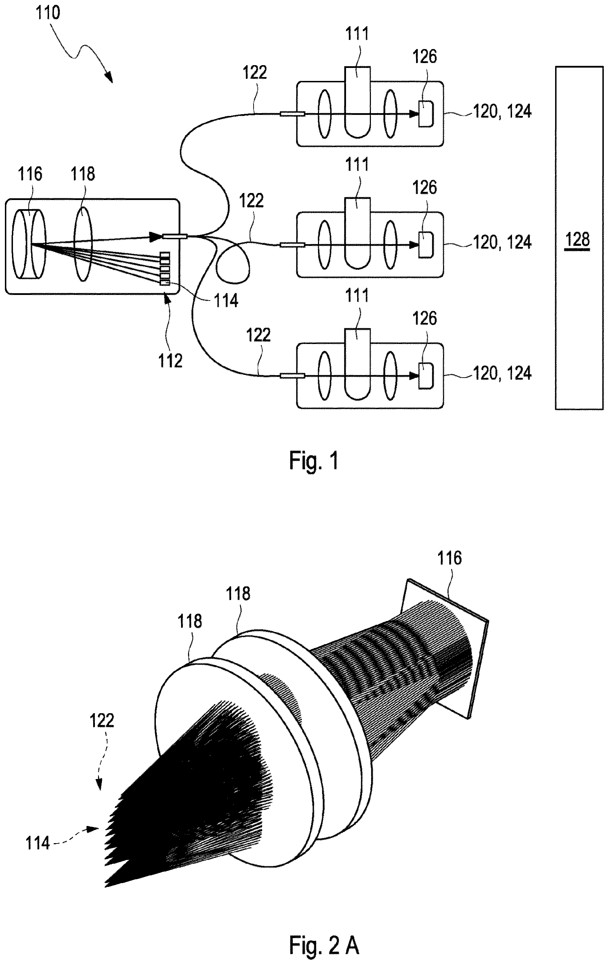

Figure 1 shows an embodiment of a photometer 110 and a light source 112 for generating illumination light for illuminating at least one sample according to the present invention. The sample may be an aliquot of a substance such as a chemical or biological compound. Specifically, the sample may be or may comprise at least one biological specimen, such as one or more of: blood; blood serum; blood plasma; urine; saliva. The sample may be provided in at least one sample container, e.g. a measurement cuvette 111.

The light source 112 comprises at least one array of light emitters 114. Each of the light emitters 114 is configured for emitting at least one light beam along a light beam path, wherein the light beam has a predefined wavelength range. For example, light used for the typical purposes of the present invention is light in a wavelength range from the near ultraviolet to the near infrared spectral range, e.g. from 340 to 800 nm. Material properties or properties on the chemical constitution of many objects can be derived in this spectral range. It shall be noted, however, that other spectral ranges are also feasible. The array of light emitters 114 may comprise a one- or a two-dimensional array of light emitters 114. The light emitters 114 may be arranged within a flat plane or on a curved plane. An arrangement on a curved plane may allow for compensating chromatic aberration and field curvature of a used transfer element, e.g. of a collimating lens or lens system, thereby maximizing an output power.

The array of light emitters 114 may be arranged, e.g. linearly arranged, on a printed circuit board assembly (PCBA). For example, the array of light emitters 114 may be mounted using a "chip-on-board" technology and/or a "chip-on-flex" technology. For example, for arranging the light emitters 114 on a curved plane LEDs may be used which are mounted to flex-print assemblies using a chip-on-board technology.

For example, each of the light emitters 114 comprises at least one light-emitting diode. Thus, as an example, the light-emitting diode, may comprise one or more of: a light-emitting diode based on spontaneous emission of light, in particular an organic light emitting diode, a light-emitting diode based on superluminescence (sLED), or a laser diode (LD). The LED may have a spectral bandwidth from 20 to 30 nm.

The light emitters 114 of the array may be of the same type or, alternatively, of a different type. The light emitters 114 of the array may be controllable independently from each other, such as by providing electric current to each of the light emitters 114 independently

Each of the light emitters 114 is configured for emitting at least one light beam having a predefined wavelength range. An optical source spectrum of the array of light emitters 114 may range from near ultraviolet to near infrared, e.g. from 340 to 800 nm. For example, the light-emitting diodes have a center wavelengths at least partially located in the spectral range of 340 to 800 nm. In the embodiment of Figure 1, the light emitters 114 may be configured for emitting light beams of different wavelengths. The array of light emitters 114 may be configured for emitting at least 12 wavelength bands.

The light emitters 114 may emit the light beams at least partially at different times, e.g. at least partially sequentially and/or time shifted.

The light source 112 comprises at least one reflective optical grating 116 configured for overlaying the light beam paths. The overlaying of the light beam paths may comprise e.g. superimposing, e.g. spatial superimposing, the trajectories of the light beams generated by the different light emitters of the array. The optical grating 116 is a reflective grating. The reflective optical grating 116 may be configured for reflecting impinging light. The reflective optical grating 116 may have a reflecting surface. The reflective surface may be coated with one or more of at least one metal such as aluminum, silver, gold, or a multilayer dielectric high-reflective coating.

The light source 112 further comprises at least one transfer element 118. In Figure 1, the transfer element 118 is exemplarily depicted as a single lens. However, other embodiments are possible. For example, the transfer element 118 may comprise two lenses, e.g. as shown in Figures 2A to 2C .The transfer element 118 may be configured for collimating the emission cones of the light beams emitted by the light emitters 114, e.g. by using one or multiple lenses of appropriate size.

The transfer element 118 is arranged between the array of light emitters 114 and the optical grating 116 such that the transfer element 118 directs the emitted light beams onto the optical grating 116 and provides the light beams reflected from the optical grating 116 and impinging on the transfer element 118 into at least one measurement channel 120. The measurement channel 120 comprises the sample.

For example, the optical setup may be as follows, e.g. as shown in Figures 1 and 2A to 2C. The array of LEDs may be followed by one set of lenses, e.g. in Figures 2A to 2C two lenses, and the reflective optical grating 116. Here, the diffracted light beams may pass the same set of lenses that direct them to the measurement channel 120, e.g. focus them to a fiber entry of at least one optical fiber 122. In Figures 2A to 2C the positions of the array of light emitters 114 and the optical fibers 122 are indicated. Thus, light emitted by the light emitters 114 passes the transfer element 118 twice. The transfer element 118 may direct the light beams from the array of light emitters 114 to the optical grating 116 and, afterwards, the transfer element 118 may focus the light beams reflected from the optical grating 116 into the measurement channel 120, in particular into at least one optical fiber 122. Most often the first-order light beam is going back along the incident beam. Such a configuration can allow for reducing a required space and component costs. This configuration can allow making the optical setup more compact.

In Figure 1, an embodiment with three measurement channels 120 is shown. However, other embodiments are possible, e.g. with more than three measurement channels 120. The measurement channel 120 may comprises at least one sample container holder configured for holding at least one sample container comprising a sample. For example the sample container may be a measurement cuvette 111, and the sample container holder may be a sample cuvette holder.

The measurement channel 120 further comprises at least one detection unit 124. The detection unit 124 comprises at least one photosensitive element 126, e.g. an array of photosensitive elements 126, for detecting detection light from the sample. The photosensitive element 126 is configured for generating at least one detector signal in response to illumination. The photosensitive elements 126 may comprise at least a photosensitive area configured for generating an electrical signal depending on an intensity of incident light. The photosensitive area may specifically be located on a surface of the photosensitive element. The measurement channel 120 may comprise a single photosensitive element 126, e.g. a single photodetector. Alternatively, the photosensitive element 126 may be or may be part of a pixelated optical device. For example, an array of photosensitive elements 126 may be used comprising a one- or a two-dimensional array of photosensitive elements. As an example, the array of photosensitive elements may comprises a CCD sensor, e.g. a CCD chip, or a CMOS sensor, e.g. a CMOS chip. However, non-pixelated photosensitive elements 126 are possible, as described above. As shown in Figure 1, the measurement channel 120 may comprise additional optical elements such as additional transfer elements, e.g. for focusing the illumination light on the sample and for directing the detection light onto the photosensitive element 126.

As outlined above, the light source 112 may comprise at least one optical fiber 122. The optical fiber 122 may be configured to guide at least partially at least one light beam impinging on its entrance end to its exit end. The entrance end and the exit end may be separated from each other by a certain distance and may be connected by at least one light guiding structure. Dimensions and properties of the transfer element 118 and the optical grating 116 are selected such that an incident cone on an entrance end of the optical fiber 122 optimally fills a fibers facet and numerical aperture, thereby maximizing a coupled optical power. The orientation of the optical grating 116 and line density, as well as the position of the light emitters 114 may be adjusted in such a way that the diffracted beams that leave the optical grating 116 are all collinearly superimposed for all light emitters 114. When subsequently passing the transfer element 118 the overlaid beams may be focused and may be coupled into the optical fiber.

The light source 114 may comprise a bundle of optical fibers 122. The bundle may comprise a plurality of single optical fibers 122 or a plurality of multifurcated optical fibers 122. The optical fibers 122 may have identical properties. The bundle of optical fibers 122 may have a common entrance end. Each of the optical fibers 122 may have its own exit end. A number of optical fibers 122 may correspond to a number of measurement channels 120.

The light source 114 comprises at least one first coupling element configured for coupling the light beams leaving the optical grating 116 into the optical fiber 122. For example, in the embodiment of Figure 1, the transfer element 118 may function as a first coupling element. However, other options are feasible, e.g. embodiments in which the light source 114 comprises at least one first coupling element in addition to the transfer element 118.

The photometer 110 is configured for obtaining photometric information. The photometric information may be transmission or absorption data. The photometric information may be one or more of at least one luminance value, at least one luminous intensity value, a qualitative and/or quantitative information about at least one analyte in the sample. The photometer 110 may be configured for analytical chemistry. The photometer 110 may be a clinical chemical photometer.

The photometer 110 may be a multispectral photometer.

The photometer 110 further comprises at least one processor 128 for evaluating the detector signal, thereby deriving the photometric information on the sample from the detector signal. The processor 128 specifically may be configured, such as by software programming, for performing one or more evaluation operations on the detector signal for deriving the photometric information. For example, the processor 128 may be configured for deriving the photometric information on the sample from the detector signal by using at least one, e.g. predetermined, relationship between the photometric information and the detector signal.

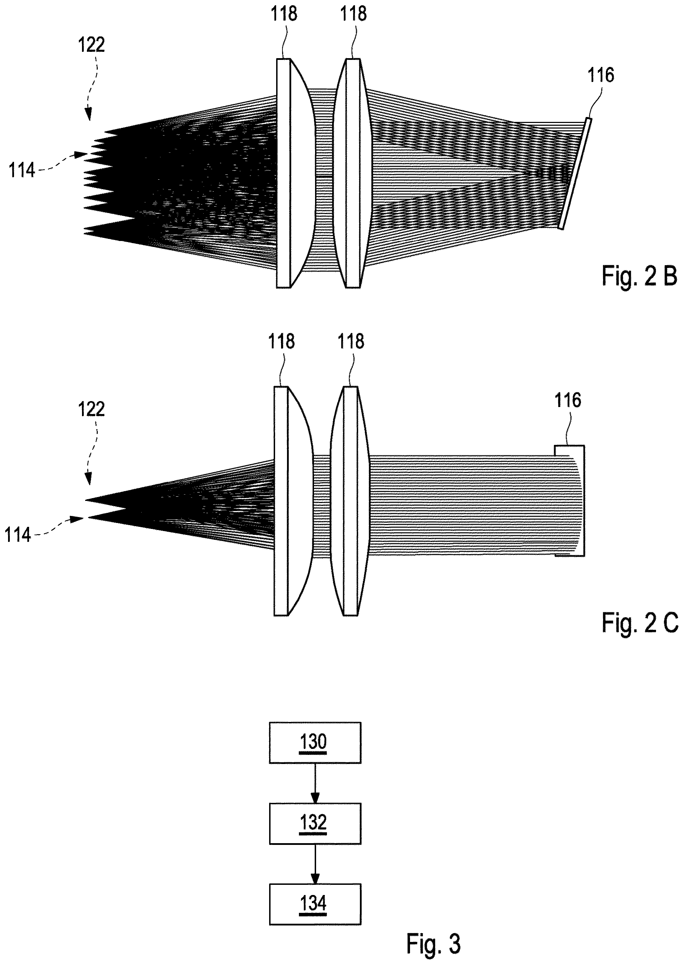

Figure 2C depicts a top view on the configuration of Figure 2B. In Figure 2C the transition into the optical fiber 122 is viewable.

Figure 3 shows an embodiment of a method for chemistry analysis of at least one sample using photometry according to the present invention. The method comprises using at least one photometer 110. Thus, with respect to a description of a photometer 110, reference is made to the description of Figures 1 and 2 above.

The method steps may be performed in the given order or may be performed in a different order. Further, one or more additional method steps may be present which are not listed. Further, one, more than one or even all of the method steps may be performed repeatedly.

The method comprises the following steps:
a) (130) generating illumination light and providing it to at least one measurement channel 120 by using the light source 112, thereby illuminating the sample of the measurement channel 120;
b) (132) detecting in the measurement channel 120 the detection light from the sample and generating at least one detector signal by using the detection unit 124; and
c) (134) evaluating the detector signal thereby deriving the photometric information on the sample by using the processor 128.

The method may comprise chemistry analysis of multiple assays. The photometer 110, as outlined above, may be a multispectral and multichannel photometer 110. The method may comprise in step a) generating illumination light and providing it to a plurality of measurement channels 120 by using the light source 112, and optionally by using the optical fibers 122, thereby illuminating the respective sample of the measurement channels 120. In step b), in each of the measurement channels 120, the detection light from the sample may be detected and at least one detector signal may be generated by using the respective detection unit 124. Step c) may comprise evaluating the detector signals thereby deriving the photometric information on the samples from the detector signals by using the processor 128.

### List of reference numbers

- 110: photometer
- 111: measurement cuvette
- 112: Light source
- 114: measurement cuvette
- 116: optical grating
- 118: transfer element
- 120: measurement channel
- 122: optical fiber
- 124: detection unit
- 126: photosensitive element
- 128: processor
- 130: generating illumination light
- 132: detecting detection light
- 134: evaluating the detector signal

## Claims

1. A light source (112) for generating illumination light for illuminating at least one sample, wherein the light source (112) comprises
- at least one array of light emitters (114), wherein each of the light emitters (114) is configured for emitting at least one light beam along a light beam path, wherein the light beam has a predefined wavelength range, and
- at least one reflective optical grating (116) configured for overlaying the light beam paths,
- at least one transfer element (118);
wherein the transfer element (118) is arranged between the array of light emitters (114) and the optical grating (116) such that the transfer element (118) directs the emitted light beams onto the optical grating (116) and provides the light beams reflected from the optical grating (116) and impinging on the transfer element (118) into at least one measurement channel (120), wherein the measurement channel (120) is configured for receiving at least one sample.

2. The light source (112) according to the preceding claim, wherein the light emitters (114) are configured for emitting light beams of different wavelengths.

3. The light source (112) according to any one of claims 1 or 2, wherein the light emitters (114) are configured for emitting light beams of the same wavelength, wherein the light emitters (114) are arranged perpendicular to a dispersion direction for said wavelength of the optical grating (116).

4. The light source (112) according to any one of claims 1 to 3, wherein an optical source spectrum of the array of light emitters (114) ranges from near ultraviolet to near infrared.

5. The light source (112) according to any one of claims 1 to 4, wherein each of the light emitters (114) comprises at least one light-emitting diode.

6. The light source (112) according to any one of claims 1 to 5, wherein the light source (112) is configured for directly directing the light beams to at least one sample container, or wherein the light source (112) comprises at least one optical fiber (122).

7. The light source (112) according to any one of claims 1 to 6, wherein the light emitters (114) are arranged on a curved plane.

8. The light source (112) according to any one of claims 1 to 7, wherein the optical grating (116) comprises at least one spherical grating, wherein the spherical grating is configured for overlaying the light beam paths and for focusing the light beams into the measurement channel (122).

9. A photometer (110) for obtaining photometric information, comprising:
- at least one light source (112) according to any one of claims 1 to 8,
- at least one measurement channel (120) comprising at least one sample container holder configured for holding at least one sample container comprising a sample, wherein the measurement channel (120) further comprises at least one detection unit (124) comprising at least one photosensitive element (126) in a beam path of detection light from the sample, wherein the photosensitive element (126) is configured for generating at least one detector signal in response to illumination,
- at least one processor (128) for evaluating the detector signal, thereby deriving the photometric information on the sample from the detector signal.

10. The photometer (110) according to the preceding claim, wherein each of the photosensitive elements (126) comprises at least a photosensitive area configured for generating an electrical signal depending on an intensity of incident light.

11. The photometer (110) according to any one of claim 9 to 10, wherein the sample is a sample of a bodily fluid such as blood, plasma, serum, saliva or urine.

12. A method for chemistry analysis of at least one sample using photometry, wherein the method comprises using at least one photometer (110) according to any one of claims 9 to 11, the method comprising the following steps:
a) (130) generating illumination light and providing it to at least one measurement channel (120) by using the light source (112), thereby illuminating the sample of the measurement channel (120);
b) (132) detecting in the measurement channel the detection light from the sample and generating at least one detector signal by using the detection unit (124); and
c) (134) evaluating the detector signal thereby deriving the photometric information on the sample by using the processor (128).

13. A computer program comprising instructions which, when the program is executed by the photometer according to any one of claims 9 to 11, cause the photometer to perform the method according to claim 12.

14. A computer-readable storage medium comprising instructions which, when the instructions are executed by the photometer according to any one of claims 9 to 11, cause the photometer to perform the method according to claim 12.

15. A non-transient computer-readable medium including instructions that, when executed by one or more processors, cause the one or more processors to perform the method according to claim 12.
